# EUROPEAN PATENT SPECIFICATION

(11) **EP 2 133 129 B1**
(45) Date of publication and mention of the grant of the patent: **30.11.2011**
(21) Application number: 08158082.1
(22) Date of filing: 12.06.2008
(51) Int. Cl.: B01D 9/00, A23L 1/39, A47J 43/28

(54) **Cooking accessory**
Kochzubehör
Accessoire de cuisine

(43) Date of publication of application: 16.12.2009
(73) Proprietor: Samson, Ilan Zadik, London Greater London NW3 7DE (GB)
(72) Inventor: Samson, Ilan Zadik, London Greater London NW3 7DE (GB)
(74) Representative: Messulam, Alec Moses

(56) References cited:
- EP-A- 1 407 700
- DE-A1- 3 314 692
- GB-A- 2 444 908
- US-A- 2 572 524
- US-A- 4 024 057

## Description

### Field of the invention

The present invention relates to a method and system for removing fat floating on hot soup or gravy.

### Background of the invention

When boiling pieces of meat or chicken, to make a soup, gravy, or a consommé, fat from the animal floats to the surface. For health and culinary reasons, this fat needs to be skimmed off. Removing the fat by means of a spoon or ladle is difficult and inefficient, resulting in some fat remaining in the soup and much of the soup being wasted. Special fat-separating jugs exist, but these involve a messy transfer of the liquids from the cooking vessel into the jug.

In US 4,024,057 there are disclosed a device for removing liquid grease from solutions, such as soups and broths, and a method for using the device. The grease removing device includes a flat plate having a multiplicity of projections on its underside. A container for holding coolant and a handle are also provided. In use, the plate is cooled to a temperature lower than the freezing point of the grease; the underside of the plate is then brought into contact with the floating grease; and the plate with the attached solidified grease is then removed from the solution.

Because of the poor thermal conductivity of the fat, once a thin layer has congealed on the plate its efficiency is severely reduced. It is not therefore usually possible to remove all the fat in one operation. Instead, it is necessary to remove the fat adhering to the underside of the plate and to repeat the operation several times. For this reason, it is important to be able to remove the fat from the underside of the plate quickly and easily. DE -A-3314692 shows a system according to the preamble of claim 1.

### Summary of the invention

In accordance with the present invention there is provided a system as recited in claim 1.

Preferably, the container may have a sidewall and two upstanding walls of greater height than the sidewall extending from the base of the container on which the underside of the vessel may be scraped and on which the vessel may rest in a horizontal attitude.

The side edges of the upstanding walls are preferably spaced from the sidewall of the container to leave a free passage through which liquid may flow.

The sidewall may advantageously also have at least one pouring lip so that liquid collected in the container may be tipped out cleanly and without spillage.

The vessel may have a thermally insulated handle but it is preferred to form the sidewall of the vessel from an insulating material.

Conveniently, the sidewall of the vessel is formed of a plastics material that is secured to a metal plate constituting the base, the plate preferably being formed of aluminium.

The sidewall may be formed of one part, or two separately formed parts that are assembled to one another and on to the base plate and suitably sealed relative to each other and the base plate. Alternatively, in situ moulding may be used to mould the metal base plate and the plastics sidewall of the vessel in one piece.

To allow the cooled base of the vessel to reach to the edge of the pan containing the soup, it is preferred that along at least part of the periphery of the vessel the base should project at least as far as and preferably beyond the sidewall of the vessel. It is also preferable for the base to remain flat all the way to its edge and for the edge not to flare out on its way up.

It is advantageous for the periphery of the base to be curved and non-circular so as to present edges with different radii of curvature. This allows the base to reach close to the walls of a variety of soup containers so most of the floating fat may be successfully removed.

US 4,024,057 tried to maximise the surface area of the underside of the cooled plate by providing projections on it. This marginally increased the surface area to which the fat can adhere but was not sufficient to remove all the fat in one operation. It therefore remained necessary in some way to remove the fat from the cooled plate and to repeat the operation. However, the projections on the underside interfered with mechanical removal of the fat. The alternative proposed in the latter patent, namely that of heating the plate to melt the fat, is not practical as it would take too long, aside from making inefficient use of energy. It is believed that these are amongst the reasons why, despite having been in existence for more than thirty years, the device of US 4,024,057 has not enjoyed any commercial success.

In contrast with the teaching of US 4,024,057, the underside of the cooled plate in the present invention has no projections and is flat. Because of this, any fat adhering to it can be scraped off by simply dragging the underside across a straight edge. At the same time, the fat can be collected in a container without mess and at the end of the task the plate can readily be wiped clean.

### Brief description of the drawings

The invention will now be described further, by way of example, with reference to the accompanying drawings, in which :
Figure 1 is a perspective view of a hand held vessel for removing fat floating on hot soup, and
Figure 2 is a section showing the vessel of Figure 1 resting on its stand.

### Detailed description of the preferred embodiment

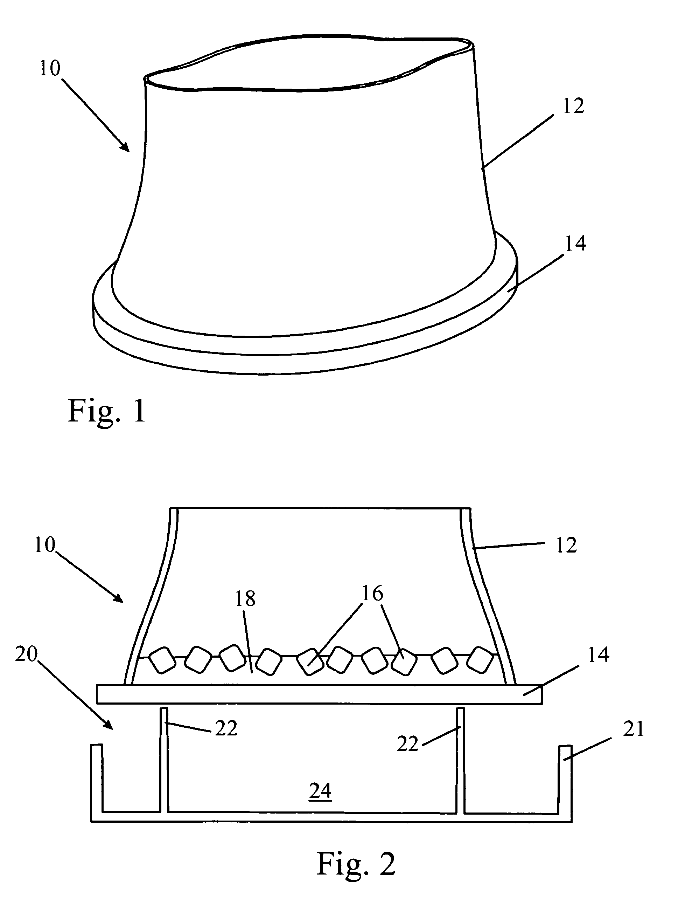

Figure 1 shows a vessel 10 having a shaped sidewall 12 made of a plastics material and an aluminium base 14 of which the periphery extends beyond the sidewall 12. The top of the vessel is designed and dimensioned so that it can be held between the fingers and thumb of one hand and so that it can be rotated by movement of the thumb as well as by rotation of the wrist. The base 14 has a curved non-circular periphery so that it can be pushed close to the wall of any pan, regardless of radius of curvature.

In use, some ice 16, e.g. cubes, is placed inside the vessel 10, as shown in Figure 2, and lowered onto the fat floating on hot soup in a pan. On contact with the base 14, the fat cools, congeals and sticks to the flat underside of the base 14. The heat of the fat melts some of the ice, but the molten ice 18 is still at the same temperature as the solid ice 16 and continues to cool any fat with which the base comes into contact. The heat given off by the fat acts as the latent heat of melting of the ice so that the base 14 remains cools for a reasonable time. Should the base 14 cease to be effective in picking up fat, it is only necessary to replenish the ice in the vessel.

Once the fat has adhered to the base 14, raising the vessel 10 will remove the fat without removing any of the soup. The underside of the base 14 is scraped over a straight edge to remove the fat and the process repeated until most of the fat is removed from the soup.

Once the vessel 10 has been used to pick up fat from soup, it would soil a work surface if set down on it. The vessel cannot be placed on its side, as the liquid and ice within it would spill out. It is therefore provided with a stand 20 as shown in Figure 2. The stand has at least one but preferably two upstanding walls 22 on which the vessel 10 can rest and over which its underside can be dragged. Fat scraped off the base 14 of the vessel 10 collects in a container 24 forming part of the stand. The walls 22 or at least their upper edges could be made of an elastomer in order to conform to the shape of the underside of base 14 to act as a squeegee.

The upstanding walls 22 are taller than the sidewall 21 of the container 24 and their side edges are spaced from the sidewall 21. At least one pouring lip is provide on the sidewall 21 so that liquid collected in the container can be tipped out of the container 24, allowing the container to be emptied cleanly and without spillage. The space between the edges of the upstanding walls 22 and the container sidewall 21 ensures that liquid can flow freely towards the pouring lip and that the walls 22 do not act to divide the container 24 into separate non-communicating compartments.

The drawings do not show the manner in which the sidewall 12 of the vessel 10 is secured to the base 14 but the construction of the vessel is not of primary significance to the present invention. The sidewall 12 may be formed in one piece and glued in place or staked or snapped on to a receiving feature on a plate forming the base 14, or it may be formed in two pieces that are secured to one another and to the base. A further possibility is to mould the sidewall 12 in situ onto the base 14.

It is furthermore possible for the sidewall 12 and the base 14 to be formed in one piece of the same material but then an insulating grip should be used to make the vessel comfortable to grip.

Filling a vessel with ice is a convenient and inexpensive way of absorbing large amounts of heat from the floating fat to cause it to congeal but the invention is not restricted to this way of cooling the plate. One could for example resort to an electrically powered Peltier effect device to cool the fat.

## Claims

1. A system comprising an apparatus for removing fat floating on hot soup, comprising a vessel (10) capable of containing ice and having a thermally conducting base (14), wherein the base (14) has a flat underside **characterised in that** the system further comprises a stand (20) for the vessel (10), the stand (20) including an upstanding wall (22) with a straight upper edge over which the underside of the base of the vessel (20) can be scraped to remove any congealed fat adhering to the underside and the stand including, a container (24) for collecting fat removed from the underside.

2. A system as claimed in claim 1, wherein the container (24) has a sidewall (21) and two upstanding walls (22) of greater height than the sidewall (21) extending from the base of the container (24) on which the underside of the base 14 of the vessel (10) may be scraped and on which the vessel may rest in a horizontal attitude.

3. A system as claimed in claim 2, wherein the side edges of the upstanding walls (22) are spaced from the sidewall (21) of the container (24) to leave a free passage through which liquid may flow.

4. A system as claimed in claim 2 or 3, wherein the sidewall (21) of the container (24) has at least one pouring lip.

5. A system as claimed in any preceding claim, wherein the vessel (10) has a thermally insulated handle.

6. A system as claimed in any of claims 1 to 4, wherein the sidewall (12) of the vessel (10) is formed from an insulating material.

7. A system as claimed in claim 6, wherein the sidewall (12) of the vessel is formed of a plastics material that is secured to a metal plate constituting the base (14).

8. A system as claimed in any preceding claim, wherein the base (14) projects at least as far as the sidewall (12) of the vessel (10) along at least part of the periphery of the vessel (10).

9. A system as claimed in any preceding claim, wherein the base (14) remains flat all the way to its edge.

10. A system as claimed in any preceding claim, wherein the periphery of the base (14) is curved and non-circular so as to present edges with different radii of curvature.

## Patentansprüche

1. Ein System, das eine Vorrichtung zum Entfernen von Fett, das auf heißer Suppe schwimmt, beinhaltet, bestehend aus einem Gefäß (10), das Eis aufnehmen und einen wärmeleitenden Boden (14) aufweisen kann, wobei der Boden (14) eine ebene Unterseite hat, **dadurch gekennzeichnet, dass** das System überdies einen Ständer (20) für das Gefäß (10) umfasst, wobei der Ständer (20) eine aufrechte Wand (22) mit einer geraden oberen Kante beinhaltet, über der die Unterseite des Bodens des Gefäßes (20) abgeschabt werden kann, um erstarrtes Fett zu entfernen, das an der Unterseite anhaftet, und der Ständer ein Behältnis (24) beinhaltet, das dazu dient, Fett aufzufangen, das von der Unterseite entfernt wird.

2. Ein System, wie in Anspruch 1 beansprucht, worin das Behältnis (24) eine Seitenwand (21) und zwei aufrechte Wände (22) aufweist, die höher sind als die Seitenwand (21), die sich vom Boden des Behältnisses (24) erstreckt, auf dem die Unterseite des Bodens (14) des Gefäßes (10) abgeschabt werden kann und auf dem das Gefäß horizontal gelagert werden kann.

3. Ein System, wie in Anspruch 2 beansprucht, worin die Seitenkanten der aufrechten Wände (22) von der Seitenwand (21) des Behältnisses (24) beabstandet sind, um einen freien Durchgang zu belassen, durch den Flüssigkeit fließen kann.

4. Ein System, wie in Anspruch 2 oder 3 beansprucht, worin die Seitenwand (21) des Behältnisses (24) mindestens einen Ausguss aufweist.

5. Ein System, wie in einem vorhergehenden Anspruch beansprucht, worin das Gefäß (10) einen thermisch isolierten Griff aufweist.

6. Ein System, wie in einem der Ansprüche 1 bis 4 beansprucht, worin die Seitenwand (12) des Gefäßes (10) aus einem isolierenden Material gebildet wird.

7. Ein System, wie in Anspruch 6 beansprucht, worin die Seitenwand (12) des Gefäßes aus einem Kunststoff hergestellt wird, der an einer Metallplatte, die den Boden (14) bildet, befestigt ist.

8. Ein System, wie in einem vorhergehenden Anspruch beansprucht, worin der Boden (14) mindestens bis zur Seitenwand (12) des Gefäßes (10) entlang von zumindest einem Teil des äußeren Randes des Gefäßes (10) hinausragt.

9. Ein System, wie in einem vorhergehenden Anspruch beansprucht, worin der Boden (14) bis zu seinem Rand hin eben bleibt.

10. Ein System, wie in einem vorhergehenden Anspruch beansprucht, worin der äußere Rand des Bodens (14) gebogen und nicht kreisförmig ist, um Kanten mit verschiedenen Krümmungsradien zu bieten.

## Revendications

1. Un système comprenant un appareil destiné à retirer de la matière grasse flottant sur de la soupe chaude, comprenant un récipient (10) pouvant contenir de la glace et possédant une base thermo conductrice (14), où la base (14) possède une face inférieure plane, **caractérisé en ce que** le système comprend en outre un support (20) pour le récipient (10), le support (20) comprenant une paroi verticale (22) avec une bordure supérieure rectiligne sur laquelle la partie inférieure de la base du récipient (20) peut être grattée de façon à retirer toute matière grasse figée adhérent à la partie inférieure et le support comprenant un réservoir (24) destiné à recueillir la matière grasse retirée de la partie inférieure.

2. Un système selon la Revendication 1, où le réservoir (24) possède une paroi latérale (21) et deux parois verticales (22) d'une hauteur plus grande que la paroi latérale (21) s'étendant de la base du réservoir (24) sur laquelle la partie inférieure de la base 14 du récipient (10) peut être grattée et sur laquelle le récipient peut être posé dans une position horizontale.

3. Un système selon la Revendication 2, où les bordures latérales des parois verticales (22) sont espacées de la paroi latérale (21) du réservoir (24) de façon à laisser un passage libre par lequel du liquide peut s'écouler.

4. Un système selon la Revendication 2 ou 3, où la paroi latérale (21) du réservoir (24) possède au moins un bec verseur.

5. Un système selon l'une quelconque des Revendications précédentes, où le récipient (10) possède une poignée thermiquement isolée.

6. Un système selon l'une quelconque des Revendications 1 à 4, où la paroi latérale (12) du récipient (10) est fabriquée à partir d'un matériau isolant.

7. Un système selon la Revendication 6, où la paroi latérale (12) du récipient est fabriquée dans un matériau plastique qui est fixé à une plaque métallique constituant la base (14).

8. Un système selon l'une quelconque des Revendications précédentes, où la base (14) s'avance au moins jusqu'à la paroi latérale (12) du récipient (10) le long au moins d'une partie de la périphérie du récipient (10).

9. Un système selon l'une quelconque des Revendications précédentes, où la base (14) reste plane jusqu'à sa bordure.

10. Un système selon l'une quelconque des Revendications précédentes, où la périphérie de la base (14) est incurvée et non circulaire de façon à présenter des bordures avec des rayons de courbure différents.
